# FASCICULE DE BREVET EUROPEEN

(11) **EP 0 381 573 B1**
(45) Date de publication et mention de la délivrance du brevet: **01.06.1994**
(21) Numéro de dépôt: 90400248.2
(22) Date de dépôt: 30.01.1990
(51) Int. Cl.: G05D 1/08

(54) **Système de stabilisation mécanique à contre-rotation à rotors séparés**
Gegenrotationsmechanisches Stabilisierungssystem mit getrennten Rotoren
Mechanical stabilization system using contrarotating with separate rotors

(30) Priorité: 31.01.1989 FR 8901217
(43) Date de publication de la demande: 08.08.1990
(73) Titulaire: SOCIETE EUROPEENNE DE PROPULSION, 92150 Suresnes (FR)
(72) Inventeur: Atlas, Gérard, F-27950 Saint Marcel (FR)
(74) Mandataire: Thévenet, Jean-Bruno

(56) Documents cités:
- WO-A-86/00863
- WO-A-87/00654
- WO-A-88/10459
- US-A- 4 723 735
- Aerospace Mechanism Symposium 01 mai 1987, Houston pages 165 - 175; Wiktor P.: "A Reactionless Precision Pointing Actuator"

## Description

La présente invention a pour objet un système de stabilisation mécanique à contre-rotation à rotors séparés, comprenant un support à stabiliser, un rotor utile monté sur le support à l'aide de paliers et solidaire d'un organe utile dont au moins un paramètre associé à la rotation du rotor utile est variable en fonction du temps, un premier moteur électrique interposé entre le support et le rotor utile pour assurer l'entraînement en rotation du rotor utile, le premier moteur comprenant des masses polaires bobinées solidaires du support, un rotor antagoniste, un deuxième moteur pour l'entraînement du rotor antagoniste, un détecteur interposé entre le rotor utile et le support pour mesurer ledit paramètre associé à la rotation du rotor utile auquel est imposée une loi de mouvement prédéterminée en fonction du temps, et un premier circuit d'asservissement recevant les signaux émis par le premier détecteur pour modifier les caractéristiques de fonctionnement du premier moteur de façon à respecter ladite loi de mouvement prédéterminée pour le rotor utile.

Les systèmes tournants dont au moins un paramètre tel que la position, la vitesse, le couple, l'accélération, est asservi en fonction du temps, tendent à perturber, par un effet de réaction, le support sur lequel ils sont montés. De telles perturbations peuvent être en général considérées comme négligeables lorsque le support présente une masse importante, comme c'est le cas par exemple pour un gros navire. En revanche, les perturbations deviennent conséquentes et doivent être compensées, si le support présente une masse relativement réduite ou doit conserver une position très précise. C'est le cas notamment pour les satellites devant conserver en orbite une attitude bien définie ou assujettis à des impératifs de microgravité : les systèmes embarqués sur un satellite, tels que des systèmes de rotation d'antenne ou de panneaux solaires à vitesse non constante tendent à perturber de façon intolérable la stabilité du satellite en l'absence de systèmes de stabilisation.

On a déjà proposé dans un compte rendu d'une conférence de Peter Wiktor intitulée "A Reactionless Precision Pointing Actuator", présentée au "Aerospace Mechanism Symposium" tenu a Houston en mai 1987, de réaliser un dispositif de commande d'une plate-forme gyroscopique qui assure en même temps une stabilisation pour empêcher l'apparition d'un couple de réaction sur le support de la plate-forme constitué par un vaisseau spatial ou un satellite. Pour assurer un découplage entre les mouvements de la plate-forme gyroscopique et la commande de l'attitude du vaisseau spatial, un mouvement de contre-rotation est imparti à une roue de réaction incorporée dans la plate-forme gyroscopique et munie d'un arbre coaxial à l'axe de la plate-forme gyroscopique et entraîné en rotation en sens inverse par rapport à cette dernière à l'aide d'un moteur électrique de roue de réaction dont le stator est monté sur la plate-forme gyroscopique et le rotor est solidaire dudit arbre coaxial. Un second moteur d'entraînement direct dont le stator est solidaire du support et le rotor est solidaire de l'axe de la plate-forme gyroscopique sert à la fois à l'entraînement de la plate-forme gyroscopique pour donner à celle-ci une position angulaire ou une vitesse de rotation en fonction d'une loi prédéterminée et pour compenser les couples parasites dûs aux frottements dans les paliers ou à la présence de câbles d'alimentation électrique qui empêchent des rotations angulaires supérieures à 2 π radians. Le circuit d'asservissement associé au moteur électrique de roue de réaction présente une bande passante située dans une plage de fréquences plus élevée que la bande passante des circuits d'asservissement associés au moteur d'entraînement direct.

Le mode de réalisation décrit dans l'article précité conduit à la mise en oeuvre de deux moteurs électriques de puissance non négligeable ce qui accroît la masse et la dépense d'énergie, et de plus ne se trouve pas adapté à des applications dans lesquelles l'organe tournant utile doit effectuer des rotations de plusieurs tours.

De plus, la réalisation de rotors emboîtés l'un dans l'autre peut s'avérer assez complexe dans certaines circonstances compte-tenu des problèmes posés par un empilement d'éléments concentriques et des jeux existant dans les paliers disposés entre les différents éléments concentriques.

La présente invention vise à remédier aux inconvénients précités et à permettre la réalisation d'un dispositif de stabilisation mécanique plus commode à mettre en oeuvre, plus précis, moins encombrant et qui permette un élargissement des applications possibles.

Ces buts sont atteints grâce à un système de stabilisation mécanique à contre-rotation à rotors séparés, comprenant un support à stabiliser, un rotor utile monté sur le support à l'aide de paliers et solidaire d'un organe utile dont au moins un paramètre associé à la rotation du rotor utile est variable en fonction du temps, un premier moteur interposé entre le support et le rotor utile pour assurer l'entraînement en rotation du rotor utile, le premier moteur comprenant des masses polaires bobinées solidaires du support, un rotor antagoniste, un deuxième moteur pour l'entraînement du rotor antagoniste, un détecteur interposé entre le rotor utile et le support pour mesurer ledit paramètre associé à la rotation du rotor utile auquel est imposée une loi de mouvement prédéterminée en fonction du temps, et un premier circuit d'asservissement recevant les signaux émis par le premier détecteur pour modifier les caractéristiques de fonctionnement du premier moteur de façon à respecter ladite loi de mouvement prédéterminée pour le rotor utile, caractérisé en ce que le rotor antagoniste est monté sur le support à l'aide de paliers de façon indépendante du rotor utile mais en étant coaxial à celui-ci, et qui supporte un organe d'inertie antagoniste, en ce que le deuxième moteur est interposé entre le rotor antagoniste et le support et comprend des masses polaires bobinées solidaires du support, en ce que le système comprend en outre un deuxième détecteur interposé entre le rotor antagoniste et le support, un deuxième circuit d'asservissement synchrone au premier circuit d'asservissement et recevant les signaux émis par le second détecteur pour asservir le deuxième moteur de façon à annuler les perturbations apportées par le rotor utile au support, en ce que la masse globale du rotor antagoniste équipé de l'organe d'inertie antagoniste, du second moteur et de ses paliers est inférieure à la masse globale du rotor utile, de l'organe utile, du premier moteur et de ses paliers et en ce que le rotor antagoniste est entraîné par le second moteur à une vitesse supérieure à celle du rotor utile.

Selon un premier mode de réalisation possible, l'alignement du rotor utile et du rotor antagoniste montés de façon indépendante à l'aide de paliers sur le support est réalisé grâce à un fourreau monobloc solidaire du support sur lequel sont montés l'ensemble des paliers.

Selon un autre mode de réalisation possible, l'alignement du rotor utile et du rotor antagoniste montés de façon indépendante à l'aide de paliers sur le support est réalisé grâce à deux fourreaux reliés entre eux par des brides emboîtées rendues solidaires du support, les paliers de support du rotor utile et du rotor antagoniste étant montés respectivement sur chacun desdits fourreaux.

La présence d'un rotor antagoniste indépendant du rotor utile, mais dont la coaxialité est assurée avec celle du rotor utile apporte une simplicité dans la réalisation de l'ensemble tournant et permet de mettre en oeuvre facilement deux moteurs dont les pièces polaires bobinées sont solidaires du support et qui sont asservis à partir de circuits d'asservissement indépendants de sorte que les possibilités de rotation des rotors ne sont nullement limitées par des fils de connexion par exemple. De plus, par la mise en oeuvre d'un rotor antagoniste de faible masse tournant à plus grande vitesse que le rotor utile il est possible de limiter la puissance du second moteur électrique d'entraînement du rotor antagoniste et donc la masse de l'ensemble des organes antagonistes mis en oeuvre pour stabiliser le support.

Selon un mode particulier de réalisation, le rotor utile et le rotor antagoniste sont partiellement emboîtés l'un dans l'autre de façon coaxiale, le rotor antagoniste est monté à l'intérieur du rotor utile, le second moteur étant interposé entre le support et le rotor antagoniste dans une partie en porte-à-faux dudit rotor antagoniste et les paliers de support du rotor antagoniste sont montés sur le rotor utile dont les paliers sont eux-mêmes montés sur le support à stabiliser de manière à définir un ensemble tournant d'encombrement réduit.

Dans ce cas, le rotor antagoniste est relié au support par l'intermédiaire du rotor utile, mais les mouvements du rotor antagoniste restent commandés de façon indépendante par le second moteur électrique dont les masses polaires bobinées sont fixées directement sur le support.

L'invention peut s'appliquer à divers ensembles tournants montés sur des structures de support sur terre, sur mer, dans l'air, dans la mer, dans l'espace avec ou sans présence de forces de gravité.

Selon une application particulièrement intéressante, le support est constitué par un satellite ou une station spatiale et l'organe utile monté sur le rotor utile est constitué par un organe tournant tel qu'une antenne ou un panneau solaire.

D'autres caractéristiques et avantages de l'invention ressortiront de la description suivante de modes particuliers de réalisation de l'invention, donnés à titre d'exemples, en référence aux dessins annexés, sur lesquels :
- la figure 1 est une vue schématique d'un premier mode de réalisation d'un système de stabilisation mécanique à contre-rotation à rotors séparés avec un moteur électrique principal agissant sur le rotor utile et un moteur électrique secondaire agissant sur le rotor antagoniste,
- la figure 2 est une vue schématique d'un second mode de réalisation d'un système de stabilisation mécanique à contre-rotation dans lequel un rotor utile et un rotor antagoniste partiellement emboîtés sont entraînés chacun séparément par un moteur électrique asservi,
- la figure 3 est une vue en demi-coupe axiale d'un système de stabilisation mécanique selon le mode de réalisation de la figure 1, comprenant un rotor utile et un rotor antagoniste séparé,
- les figures 4 et 5 sont des vues en demi-coupe axiale montrant des variantes de réalisation du système de stabilisation de la figure 3, dans lesquelles des moyens particuliers sont prévus pour assurer l'alignement du rotor utile et du rotor antagoniste.

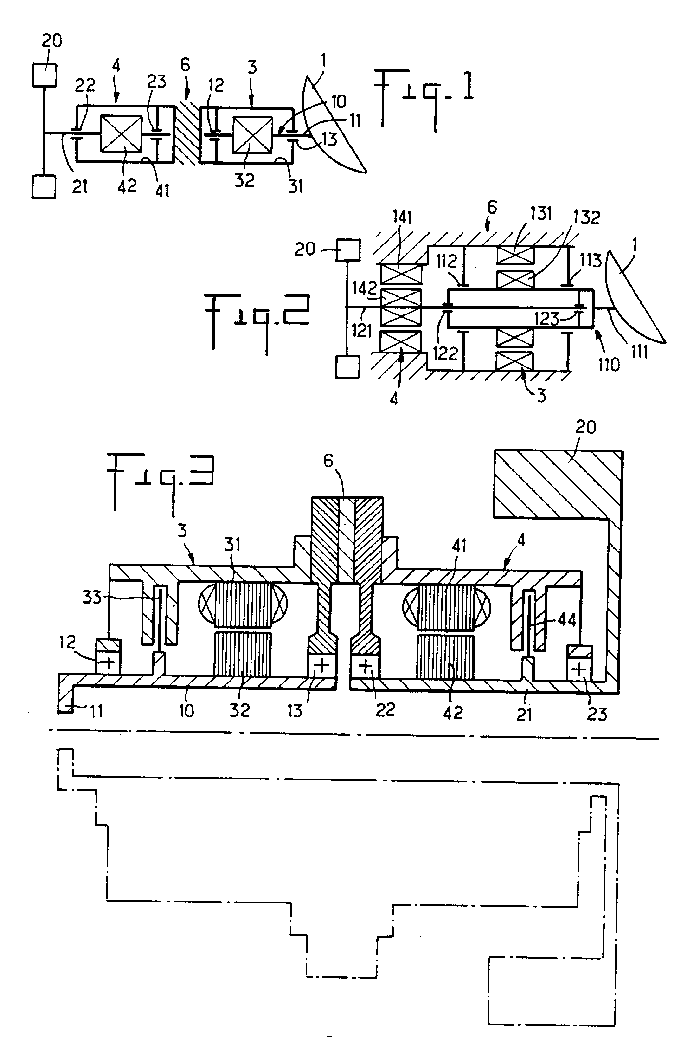

On voit sur la figure 1 la représentation schématique d'un ensemble tournant comprenant un rotor utile 10 auquel est rattaché par un arbre 11 prolongeant axialement le rotor utile 10 un organe utile 1 tel qu'une antenne par exemple, dont la position angulaire ou un autre paramètre lié à la rotation du rotor utile 10, tel que le couple, l'accélération ou la vitesse doit être ajusté en permanence selon une loi prédéterminée, sans que des perturbations soient transmises au support 6 sur lequel le rotor utile 10 est monté, par exemple au niveau de l'arbre 11, au moyen de paliers 12, 13 par exemple du type roulements.

Afin de permettre une commande des mouvements du rotor utile 10 sans perturbation sur le support 6, qui peut être par exemple un satellite de relativement faible masse, un rotor antagoniste 21 auquel est rattaché un organe d'inertie antagoniste 20 est monté sur le support 6 à l'aide de paliers 22, 23 qui peuvent être du type roulements et subit un mouvement activement commandé de sens inverse à celui du rotor utile 10 et de valeur telle que le support 6 ne subit pas de perturbation générée par les différents organes en mouvement, c'est-à-dire que les variations de moment cinétique global ressenti par le support sont nulles.

Selon la présente invention, un premier moteur électrique 3 asservi par des premiers circuits électroniques d'asservissement non représentés sur le dessin est interposé entre le rotor utile 10 et le support 6 et contribue à conférer au rotor utile 10 et à l'organe utile 1 un mouvement de rotation commandé selon des paramètres de mouvement variables et prédéterminés évoluant dans le temps. Un second moteur électrique 4 asservi par de seconds circuits d'asservissement non représentés sur les dessins assure l'entraînement du rotor antagoniste 21 et par suite l'organe de réaction 20 en sens contraire du rotor utile 10. Grâce aux moteurs asservis 3 et 4 le rotor utile 10 et le rotor antagoniste 21 sont animés par rapport au support 6 de vitesses de sens contraires selon un rapport qui résulte de l'égalité des moments cinétiques acquis par chacun de ces rotors 10,21 de façon à maintenir nul le moment cinétique total.

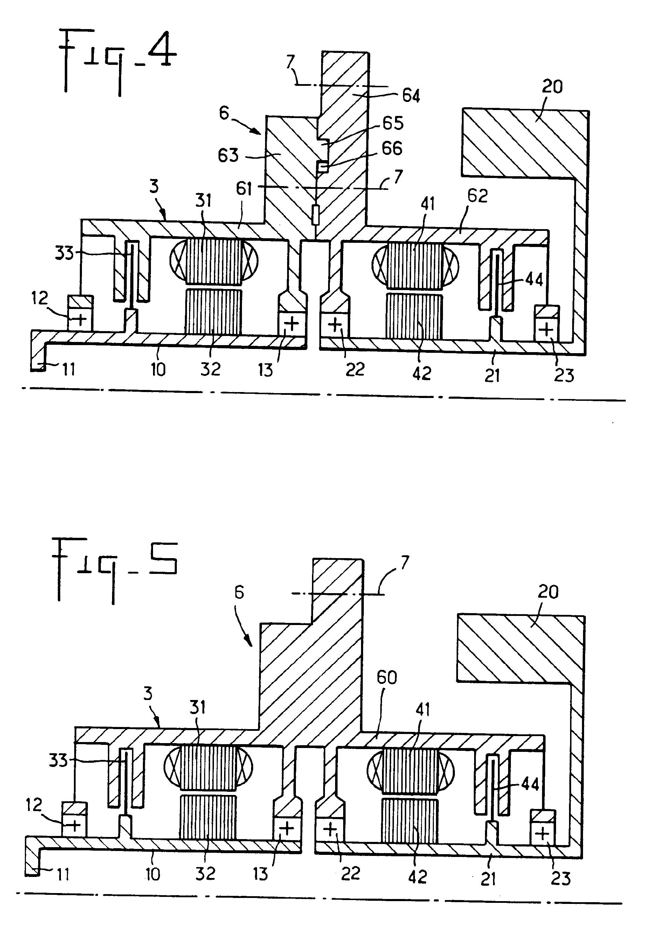

Un détecteur 33 (qui n'a été représenté que sur les figures 3 à 5) est interposé entre le rotor utile 10 et le support 6. Ce détecteur mesure le paramètre (par exemple : vitesse, ou couple, ou accélération) associé au mouvement du rotor utile 10, auquel on veut imposer une loi prédéterminée en fonction du temps. La valeur de ce paramètre, mesurée par le détecteur 33, est transmise aux circuits d'asservissement qui modifient les caractéristiques appropriées de fonctionnement du moteur 3, de façon à respecter la loi de mouvement prédéterminée pour le rotor utile 10. Quelle que soit cette loi, la rotation du rotor antagoniste 21 évite que des perturbations soient transmises au support 6.

Un détecteur 44 (qui n'a été représenté que sur les figures 3 à 5) est interposé entre le support 6 et le rotor antagoniste 21 (Fig 3 à 5) pour fournir des informations aux circuits d'asservissement associés au second moteur électrique 4, lesquels circuits d'asservissement sont synchrones aux circuits d'asservissement du moteur principal 3.

Comme on peut le voir sur les figures 3 à 5, chaque moteur électrique 3, 4 comprend une armature rotorique 32, 42 sans bobinages montée sur le rotor correspondant 10, 21 et des masses polaires 31, 41 munies de bobinage fixées sur le support 6. De la sorte, la liaison entre les sources d'alimentation électrique et les moteurs 3, 4 peut être très simplifiée et réalisée par des conducteurs statiques et l'amplitude des rotations de chacun des rotors n'est nullement limitée par des fils de connexion.

Ainsi, les angles positifs ou négatifs maximaux que peuvent parcourir le rotor utile 10 et le rotor antagoniste 21 sont pratiquement illimités et peuvent constituer un grand nombre de tours.

Ceci permet par exemple de prendre en compte le cas où le rotor utile 10 atteint d'importantes amplitudes de part et d'autre d'une valeur moyenne nulle, ou des amplitudes quelconques de part et d'autre d'une valeur moyenne non nulle, ces amplitudes étant fonction de la mission à remplir par l'inertie utile de l'organe utile 1 solidaire du rotor utile 10.

L'invention s'applique tout à fait bien au cas où le moment d'inertie JA du rotor antagoniste 21 est sensiblement inférieur au moment d'inertie JU du rotor utile 10, ce qui impose au rotor antagoniste 21 des amplitudes importantes et pouvant atteindre un grand nombre de tours.

D'une manière générale, bien que les dessins ne le fassent pas apparaître pour des raisons de clarté de la représentation, le rotor antagoniste 21 et l'organe d'inertie antagoniste 20 constituent avec l'armature 42 du moteur 4 et les paliers 22, 23 un ensemble tournant de masse sensiblement plus faible que l'ensemble tournant constitué par le rotor utile 10, l'organe utile 1, l'armature 32 du moteur 3, et les paliers 12, 13, ce qui permet aussi de mettre en oeuvre un moteur 4 de taille sensiblement plus réduite que le moteur 3 et donc de ne pas accroître de façon sensible la masse globale du système. Naturellement, pour que le moment cinétique du système reste globalement nul, la vitesse de rotation du rotor antagoniste 21 doit être plus élevée que celle du rotor utile 10.

La figure 4 montre un exemple de réalisation dans lequel l'alignement du rotor utile 10 et du rotor antagoniste 21 montés de façon indépendante à l'aide de paliers 12, 13 resp. 22, 23 sur le support 6 est réalisé grâce à deux fourreaux 61, 62 reliés entre eux par des brides 63, 64 emboîtées par un système à pions par exemple du genre tenon 65 - mortaise 66, les brides 63, 64 étant elles-mêmes fixées sur le corps du support 6, non représenté, par des moyens de fixation traditionnels 7. Les paliers 12, 13 et 22, 23 de support du rotor utile 10 et du rotor antagoniste 21 sont montés respectivement sur chacun des fourreaux 61, 62, et la coaxialité des rotors 10 et 21 est ainsi assurée de façon précise tout en conservant la commodité de montage et de commande des rotors 10, 21 et des moteurs associés 3, 4 qui restent indépendants les uns des autres.

La figure 5 montre une variante de réalisation visant à présenter les mêmes avantages que le mode de réalisation de la figure 4 en ce qui concerne la garantie de la coaxialité des rotors 10 et 21. Dans ce cas, l'alignement du rotor utile 10 et du rotor antagoniste 21 montés de façon indépendante à l'aide des paliers 12, 13 resp. 22, 23 sur le support 6 est réalisé grâce à un fourreau monobloc 60 fixé sur le corps du support 6, non représenté, par des moyens de liaison 7, et sur lequel sont montés l'ensemble des paliers 12, 13 et 22, 23.

La figure 2 concerne un second mode de réalisation de l'invention dans lequel le rotor utile 110, 111 et le rotor antagoniste 121, auxquels sont reliés respectivement l'organe utile 1 et l'organe d'inertie antagoniste 20, sont entraînés chacun par un moteur 3, 4 comportant une armature rotorique sans bobinages 132 resp. 142 solidaire respectivement du rotor utile 110 et du rotor antagoniste 121 et des masses polaires avec bobinages 131, resp. 141 montées sur le support 6. L'utilisation de deux moteurs électriques séparés 3, 4 montés chacun entre le support 6 et l'un des rotors 110, 121 et asservis à l'aide de circuits d'asservissement indépendants mais synchrones et recevant chacun des signaux d'un détecteur de position angulaire 33, 44 du rotor correspondant 110, 121 par rapport au support 6 permet de bénéficier des divers avantages mentionnés plus haut concernant notamment l'alimentation des moteurs électriques 3, 4. Dans le mode de réalisation de la figure 2, comme dans ceux des autres figures, le rotor antagoniste 121 l'organe d'inertie antagoniste associé 20 et l'armature rotorique 142 présentent une inertie plus faible que celle du rotor utile 110, de l'organe utile 1 et de l'armature rotorique 132 et tournent à une vitesse plus élevée que le rotor utile 110.

Le mode de réalisation de la figure 2 présente une compacité plus grande que les modes de réalisation des figures 1 et 3 à 5 dans la mesure où tout en coopérant avec un moteur 4 dont le stator 141 est monté sur le support 6, le rotor antagoniste 121 est partiellement emboîté dans le rotor utile 110 et est monté à l'intérieur de celui-ci à l'aide de paliers 122, 123, le moteur 4 et l'organe d'inertie antagoniste 20 étant montés en porte-à-faux sur le rotor antagoniste 121. Le rotor utile 110 est lui-même monté sur le support 6, comme dans les autres modes de réalisation, à l'aide de paliers 112, 113 qui peuvent être par exemple des roulements à bille, mais pourraient également, comme dans les autres modes de réalisation, être constitués par exemple par des paliers magnétiques ou par des paliers à gaz.

## Revendications

1. Système de stabilisation mécanique à contre-rotation à rotors séparés, comprenant un support (6) à stabiliser, un rotor utile (10) monté sur le support (6) à l'aide de paliers (12, 13; 112, 113) et solidaire d'un organe utile (1) dont au moins un paramètre associé à la rotation du rotor utile (10) est variable en fonction du temps, un premier moteur (3) interposé entre le support (6) et le rotor utile (10) pour assurer l'entraînement en rotation du rotor utile (10), le premier moteur (3) comprenant des masses polaires bobinées (31) solidaires du support (6), un rotor antagoniste (21), un deuxième moteur (4) pour l'entrainement du rotor antagoniste (21), un détecteur (33) interposé entre le rotor utile (10) et le support (6) pour mesurer ledit paramètre associé à la rotation du rotor utile (10) auquel est imposée une loi de mouvement prédéterminée en fonction du temps, et un premier circuit d'asservissement recevant les signaux émis par le premier détecteur (33) pour modifier les caractéristiques de fonctionnement du premier moteur (3) de façon à respecter ladite loi de mouvement prédéterminée pour le rotor utile (10),
caractérisé en ce que le rotor antagoniste (21) est monté sur le support (6) à l'aide de paliers (22, 23) de façon indépendante du rotor utile (10) mais en étant coaxial à celui-ci et supporte un organe d'inertie antagoniste (20), en ce que le deuxième moteur (4) est interposé entre le rotor antagoniste (21) et le support (6) et comprend des masses polaires bobinées (41) solidaires du support (6), en ce que le système comprend en outre un deuxième détecteur (44) interposé entre le rotor antagoniste (21) et le support (6), un deuxième circuit d'asservissement synchrone au premier circuit d'asservissement et recevant les signaux émis par le second détecteur pour asservir le deuxième moteur (4) de façon à annuler les perturbations apportées par le rotor utile (10) au support (6), et ce que la masse globale du rotor antagoniste (21), de l'organe d'inertie antagoniste (20), du second moteur (4) et des paliers (22, 23) est inférieure à la masse globale du rotor utile (10), de l'organe utile (1), du premier moteur (3) et des paliers (12, 13) et en ce que le rotor antagoniste (21) est entraîné par le second moteur (4) à une vitesse supérieure à celle du rotor utile (10).

2. Système selon la revendication 1, caractérisé en ce que l'alignement du rotor utile (10) et du rotor antagoniste (21) montés de façon indépendante à l'aide de paliers (12, 13 resp. 22, 23) sur le support (6) est réalisé grâce à un fourreau monobloc (60) solidaire du support (6) sur lequel sont montés l'ensemble des paliers (12, 13, 22, 23).

3. Système selon la revendication 1, caractérisé en ce que l'alignement du rotor utile (10) et du rotor antagoniste (21) montés de façon indépendante à l'aide de paliers (12, 13, resp. 22, 23) sur le support (6) est réalisé grâce à deux fourreaux (61, 62) reliés entre eux par des brides emboîtées (63, 64) rendues solidaires du support (6), les paliers (12, 13 resp. 22, 23) de support du rotor utile (10) et du rotor antagoniste (21) étant montés respectivement sur chacun desdits fourreaux (61, 62).

4. Système selon la revendication 1, caractérisé en ce que le rotor utile (110) et le rotor antagoniste (121) sont partiellement emboîtés l'un dans l'autre de façon coaxiale, en ce que le rotor antagoniste (121) est monté à l'intérieur du rotor utile (110), le second moteur (4) étant interposé entre le support (6) et le rotor antagoniste (121) dans une partie en porte-à-faux dudit rotor antagoniste (121) et en ce que les paliers (122, 123) de support du rotor antagoniste (121) sont montés sur le rotor utile (110) dont les paliers (112, 113) sont eux-mêmes montés sur le support à stabiliser (6), de manière à définir un ensemble tournant d'encombrement réduit.

5. Système selon l'une quelconque des revendications 1 à 4, caractérisé en ce que le support (6) est constitué par un satellite ou une station spatiale, et l'organe utile (1) monté sur le rotor utile (10) est constitué par un organe tournant tel qu'une antenne ou un panneau solaire.

## Patentansprüche

1. Gegenrotationsmechanisches Stabilisierungssystem mit getrennten Rotoren, umfassend ein zu stabilisierendes Gestell, (6) einen an das Gestell (6) mittels Lagern (12, 13; 112, 113) montierten Nutzrotor (10), der fest mit einer Nutzvorrichtung (1) verbunden ist, von der mindestens ein mit der Drehung des Nutzrotors (1) verbundener Parameter variabel in Abhängigkeit von der Zeit ist, wobei sich ein erster Motor (3) zwischen dem Gestell (6) und dem Nutzrotor (10) befindet, um den Nutzrotor (10) in Drehung anzutreiben, wobei der erste Motor (3) gewickelte Polarmassen (31) aufweist, die fest verbunden sind mit dem Gestell (6), einen gegenwirkenden Rotor (21), einen zweiten Motor (4) für den Antrieb des gegenwirkenden Rotors (21), einen zwischen dem Nutzrotor (10) und dem Gestell (6) angeordneten Sensor (33) zum Messen des genannten, mit der Drehung des Nutzrotors (1) verbundenen Parameters, dem ein vorbestimmtes Bewegungsgesetz in Abhängigkeit von der Zeit vorgegeben ist, und einen ersten Regelkreis, der die vom ersten Sensor (33) abgegebenen Signale empfängt, um die Funktionsdaten des ersten Motors (3) so zu verändern, daß das besagte vorbestimmte Bewegungsgesetz für den Nutzrotor (10) eingehalten wird,
dadurch gekennzeichnet, daß der gegenwirkende Rotor (21) mit Hilfe von Lagern (22, 23) an das Gestell (6) montiert ist, und zwar unabhängig vom Nutzrotor (10), aber koaxial zu diesem, und eine gegenwirkende Widerstandsvorrichtung (20) trägt, sowie dadurch, daß der zweite Motor (4) zwischen den gegenwirkenden Rotor (21) und das Gestell (6) gesetzt ist und gewickelte Polarmassen (41) aufweist, die fest verbunden sind mit dem Gestell (6), daß das System außerdem einen zweiten zwischen dem gegenwirkenden Rotor (21) und dem Gestell (6) angeordneten Sensor (44) sowie einen zweiten, zum ersten Regelkreis synchronen Regelkreis umfaßt, der die vom zweiten Sensor abgegebenen Signale empfängt, um den zweiten Motor (4) so zu regeln, daß durch den Nutzrotor (10) am Gestell (6) erzeugte Störungen ausgeschaltet werden, und daß die Gesamtmasse des gegenwirkenden Rotors (21), der Widerstandsvorrichtung (20), des zweiten Motors (4) und der Lager (22, 23) unter der Gesamtmasse des Nutzrotors (10), der Nutzvorrichtung (1), des ersten Motors (3) und der Lager (12, 13) liegt und daß die Drehzahl, mit der der zweite Motor (4) den gegenwirkenden Rotor (21) antreibt, über der Drehzahl des Nutzrotors (10) liegt.

2. System nach Anspruch 1, dadurch gekennzeichnet, daß die Axialität des Nutzrotors (10) und des gegenwirkenden Rotors (21), die unabhängig voneinander mittels Lagern (12, 13 bzw. 22, 23) am Gestell (6) montiert sind, dank eines Überbaus (60) aus einem Stück sichergestellt wird, der fest verbunden ist mit dem Gestell (6), an das alle Lager (12, 13, 22, 23) montiert sind.

3. System nach Anspruch 1, dadurch gekennzeichnet, daß die Axialität des Nutzrotors (10) und des gegenwirkenden Rotors (21), die unabhängig voneinander mittels Lagern (12, 13 bzw. 22, 23) am Gestell (6) montiert sind, dank zweier miteinander durch ineinandergeschobene Flansche (63, 64) verbundener Überbauten (61, 62) sichergestellt wird, die fest verbunden sind mit dem Gestell (6), wobei die Lager (12, 13, bzw. 22, 23) zum Halten des Nutzrotors (10) und des gegenwirkenden Rotors (21) jeweils an den jeweiligen Überbau (61, 62) montiert sind.

4. System nach Anspruch 1, dadurch gekennzeichnet, daß der Nutzrotor (110) und der gegenwirkende Rotor (121) teilweise koaxial ineinandergesteckt sind, und dadurch, daß der gegenwirkende Rotor (121) innerhalb des Nutzrotors (110) montiert ist, wobei der zweite Motor (4) zwischen dem Gestell (6) und dem gegenwirkenden Rotor (121) in einem hervorspringenden Bereich dieses gegenwirkenden Rotors (121) angeordnet ist, sowie dadurch, daß die Lager (122, 123), die den gegenwirkenden Rotor (121) halten, am Nutzrotor (110) montiert sind, dessen Lager (112, 113) selbst an dem zu stabilisierenden Gestell (6) montiert sind, um eine Dreheinheit verringerter Abmessungen zu bilden.

5. System nach einem der Ansprüche 1 bis 4, dadurch gekennzeichnet, daß das Gestell (6) ein Satellit oder eine Raumstation und daß die auf den Nutzrotor (10) montierte Nutzvorrichtung (1) eine Drehvorrichtung wie eine Antenne oder ein Sonnensegel ist.

## Claims

1. Mechanical stabilization system having counter-rotating rotors which are separate, the system comprising a support (6) to be stabilized, a working rotor (10) mounted on the support (6) by means of bearings (12, 13; 112, 113) and fixed to a working member (1) for which at least one parameter associated with the rotation of the working rotor (10) is variable as a function of time, a first motor (3) interposed between the support (6) and the working rotor (10) in order to drive the working rotor (10), the first motor (3) having wound pole pieces (31) fixed to the support (6), a reaction rotor (21), a second motor (4) for rotating the reaction rotor (21), a detector (33) interposed between the working rotor (10) and the support (6) in order to measure said parameter associated with the rotation of the working rotor (10) and on which a predetermined law of motion is to be imposed as a function of time, and a first servo-control circuit receiving signals from the first detector (33) in order to change the operating characteristics of the first motor (3) in such a manner as to ensure that said predetermined law of motion for the working rotor (10) is complied with,
characterized in that the reaction rotor (21) is mounted on the support (6) by means of bearings (22, 23) independently from the working rotor (10) while being coaxial therewith and supports a reaction inertia member (20), in that the second motor (4) is interposed between the reaction rotor (21) and the support (6) and includes wound pole pieces (41) fixed to the support (6), in that the system further includes a second detector (44) interposed between the reaction rotor (21) and the support (6), a second servo-control circuit, synchronous with the first servo-control circuit, and receiving signals from the second detector in order to servo-control the second motor (4) in such a manner as to cancel the disturbances applied to the support (6) by the working rotor (10), and in that the total mass of the reaction rotor (21), of the reaction inertia member (20), of the second motor (4), and of the bearings (22, 23) is less than the total mass of the working rotor (10), of the working member (1), of the first motor (3), and of the bearings (12, 13), and in that the reaction rotor (21) is rotated by the second motor (4) at a speed which is greater than that of the working rotor (10).

2. System according to claim 1, characterized in that the working rotor (10) and the reaction rotor (21) are independently mounted on the support (6) by means of bearings (12, 13, respectively 22, 23) and they are kept in alignment by means of a one-piece sleeve (60) fixed to the support (6) and on which all of the bearings (12, 13, 22, 23) are mounted.

3. System according to claim 1, characterized in that the working rotor (10) and the reaction rotor (21) are independently mounted on the support (6) by means of bearings (12, 13, respectively 22. 23) and are kept in alignment by means of two sleeves (61, 62) which are connected together by engaging flanges (63, 64) which are also fixed to the support (6) with the bearings (12, 13, respectively 22, 23) for supporting the working rotor (10) and the reaction rotor (21) being mounted in respective ones of said sleeves (61, 62).

4. System according to claim 1, characterized in that the working rotor (110) and the reaction rotor (121) are coaxially nested in part, in that the reaction rotor (121) is mounted inside the working rotor (110), with the second motor (4) being interposed between the support (6) and the reaction rotor (121) in a cantilevered portion of said reaction rotor (121) and in that the bearings (122, 123) supportinq the reaction rotor (121) are mounted on the working rotor (110) whose own bearings (112, 113) are mounted on the support (6) to be stabilized in such a manner as to define a rotary assembly of reduced bulk.

5. System according to any one of claims 1 to 4, characterized in that the support (6) is constituted by a satellite or a spacecraft, and the working member (1) mounted on the working rotor (10) is constituted by a rotary member such as an antenna or a solar panel.
